# EUROPEAN PATENT APPLICATION

(11) **EP 0 938 237 A2**
(43) Date of publication of application: **25.08.1999**
(21) Application number: 99300971.1
(22) Date of filing: 10.02.1999
(51) Int. Cl.: H04N 7/50, H04N 5/232, H04N 7/14

(54) **Image transmission devices and systems**

(30) Priority: 23.02.1998 JP 4074398
(71) Applicant: SONY CORPORATION, Tokyo 141 (JP)
(72) Inventor: Suga, Ryoichi, Shinagawa-ku, Tokyo 141 (JP); Yasui, Hiroyuki, Shinagawa-ku, Tokyo 141 (JP); Fujimori, Takeshi, Shinagawa-ku, Tokyo 141 (JP); Tonomura, Masashi, Shinagawa-ku, Tokyo 141 (JP)
(74) Representative: Pilch, Adam John Michael

(57) **Abstract**

An image transmission device, which prevents a time delay from occurring in compressed video data transmitted to the receiving side through a line activated at a low data transfer rate, includes a camera (21) placed on the transmitting side which images an object to be monitored. A compressor (22) receives the video signal (SVi) from the camera (21) to produce compressed video data (DV). This data (DV) is transmitted to the receiving side through a line (40). On the receiving side, an expander (31) receives the data (DV) to obtain a video signal (SVr). A monitor (32) displays an image based on the video signal (SVr). When a supervisor operates a man-machine interface (33) on the receiving side, a control signal (PTC) for a pan tilter (23) is obtained. The control signal (PTC) is transmitted to the transmitting side through the line (40). According to the operation of the man-machine interface (33), the direction of imaging of the camera (21) on the transmitting side is changed. While the screen greatly varies when the imaging direction of the camera (21) is in a changed state, the rate of compression of data by the compressor (22) on the transmitting side is controlled so as to increase, thereby restraining an increase in the amount of the data. Thus, a time delay in the compressed video data (DV) transmitted to the receiving side is prevented.

## Description

This invention relates to an image transmission device and an image transmission system using the same, which are suitable, for example, for application to a remote supervisory system.

In an image transmission device or the like wherein when an imaging range of a video camera is changed according to camera work such as panning, tilting, etc., the rate of compression of data by data compressing means is increased to restrain an increase in the amount of compressed video data, whereby a time delay is prevented from occurring in the compressed video data transmitted to the receiving side through a line activated at a low data transfer rate.

A remote supervisory system has heretofore been proposed whereby a monitor center or the like supervises or monitors pictures imaged by monitor cameras installed in important facilities built in remote places such as a generating plant, a substation, etc., or a parking zone, a convenience store, etc. through a communication line, e.g., an ISDN (Integrated Services Digital Network) line.

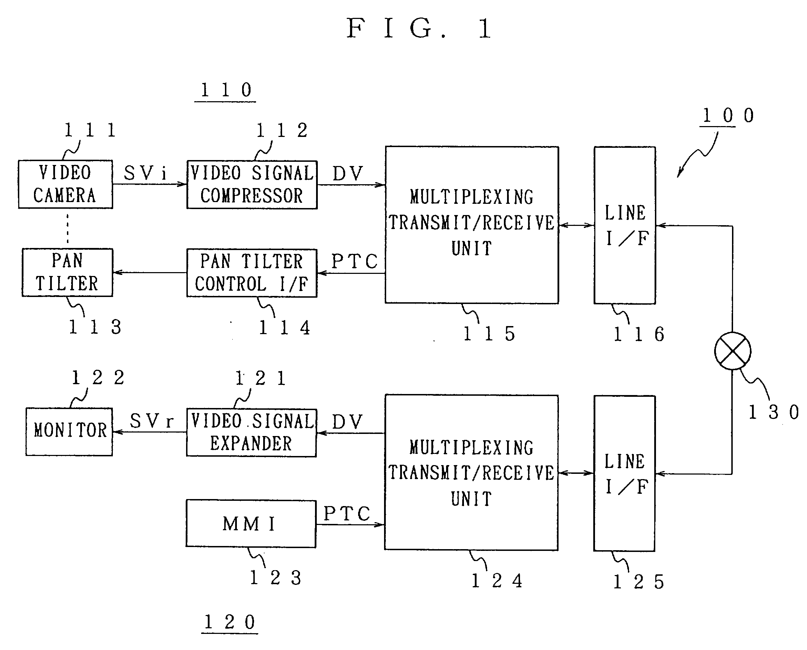

Fig. 1 shows an example of a configuration of a conventional remote supervisory system 100 using a communication line. The remote supervisory system 100 is constructed such that a transmitting-side device 110 placed on the monitored-object side and a receiving-side device 120 placed on the monitor center side are connected to each other by an ISDN line 130.

The transmitting-side device 110 comprises a video camera 111 for imaging an object (not shown) to be monitored, a video signal compressor 112 for performing an A/D (analog-to-digital) converting process, a data compressing process and the like on an imaged video signal SVi outputted from the video camera 111 to thereby obtain compressed video data DV, a pan tilter 113 for changing the imaging direction of the video camera 111 to horizontal and upward and downward directions, i.e., performing camera work such as panning, tilting, and a pan tilter control interface 114 for controlling the pan tilter 113 based on a control signal PTC for the pan tilter 113, which is transmitted from the receiving-side device 120 through the ISDN line 130, so that the pan tilter 113 may perform the camera work such as panning and tilting.

Further, the transmitting-side device 110 comprises a multiplexing transmit/receive unit 115 for performing, in multiplexed form, transmission of the compressed video data DV obtained from the video signal compressor 112 and reception of the control signal PTC for the pan tilter 113 obtained from the receiving-side device 120, and a line interface 116 for connecting the multiplexing transmit/receive unit 115 to the ISDN line 130.

On the other hand, the receiving-side device 120 comprises a video signal expander 121 for performing a data expanding process, a D/A (digital-to-analog) converting process, etc., on the compressed video data DV transmitted from the transmitting-side device 110 via the ISDN line 130 to thereby obtain a received video signal SVr, a monitor 122 for displaying an image based on the received video signal SVr, and a man-machine interface (MMI) 123 used as operating means for generating the above-described control signal PTC for pan tilter 113. Here, the man-machine interface 123 is composed of a pointing device such as a joystick or the like.

Further, the receiving-side device 120 comprises a multiplexing transmit/receive unit 124 for performing, in multiplexed form, reception of the compressed video data DV obtained from the transmitting-side device 110 and transmission of the control signal PTC for the pan tilter 113 obtained from the man-machine interface (MMI) 123, and a line interface 125 for connecting the multiplexing transmit/receive unit 124 to the ISDN line 130.

The operation of the remote supervisory system 100 shown in Fig. 1 will next be described.

The video camera 111 of the transmitting-side device 110 images an object to be supervised and supplies an imaged video signal SVi obtained thereby to the video signal compressor 112. The video signal compressor 112 performs the A/D converting process, data compressing process, etc. on the imaged video signal SVi to produce compressed video data DV. This compressed video data DV is supplied to the multiplexing transmit/receive unit 115 and then it is transmitted to the receiving-side device 120 through the ISDN line 130.

The multiplexing transmit/receive unit 124 of the receiving-side device 120 receives the above-described compressed video data DV and then supplies it to the video signal expander 121. The video signal expander 121 performs the data expanding process, D/A converting process, etc. on the compressed video data DV to produce a received video signal SVr corresponding to the imaged video signal SVi outputted from the above-described video camera 111. The video signal expander 121 supplies the received video signal SVr to the monitor 122 where an image or picture based on the received video signal SVr is displayed thereon. Thus, since the monitor 122 displays the imaged picture for the object to be monitored on the monitor center side, the supervisor can monitor the object on the screen of the monitor 122.

On the monitor center side, the supervisor operates the man-machine interface 123 of the receiving-side device 120 to change the imaging direction of the video camera 111. As a result, a control signal PTC for the pan tilter 113 is produced. MMI 123 supplies this control signal PTC to the multiplexing transmit/receive unit 124 and then it is transmitted to the transmitting-side device 110 through the ISDN line 130.

Further, the multiplexing transmit/receive unit 115 of the transmitting-side device 110 receives the above-described control signal PTC. The control signal PTC is supplied to the pan tilter control interface 114. The pan tilter 113 controls the camera work such as panning and tilting based on the control signal PTC. Thus, the imaging direction of the video camera 111 is changed according to the operation of the man-machine interface 123 by the supervisor.

On the other hand, since an ISDN line activated at a low data transfer rate of 64kbps, for example, is used as the ISDN line 130 used for the above-described conventional remote supervisory system 100, the compressed video data DV after having been subjected to the data compressing process as described above is transmitted from the transmitting-side device 110 to the receiving-side device 120.

Although not mentioned above, since the video signal compressor 112 of the transmitting-side device 110 transmits video data with efficiency, a frame-to-frame difference of a video signal is compressed so as to obtain compressed video data DV, based on ITU-TH.261 standards, for example. Therefore, the amount of the compressed video data DV is reduced in a screen whose motion is small and increased in a screen whose motion is large to the contrary.

Since the imaging range of the video camera 111 moves on during the period that the pan tilter 113 is performing the camera work such as panning and tilting, the screen greatly varies and the amount of the compressed video data DV increases. Therefore, when the ISDN line 130 is activated at the low data transfer rate as described above, time is required to transmit the compressed video data DV from the transmitting-side device 110 to the receiving-side device 120, and a time delay occurs in the compressed video data DV transmitted to the receiving-side device 120. Thus, when the time delay occurs in the compressed video data DV, a time delay also occurs even in the image displayed on the monitor 122. Therefore, it is difficult that the supervisor operates the man-machine interface 123 and thereby controlling the pan tilter 113 so as to catch an object to be monitored corresponding to a target.

Therefore, an aim of at least an embodiment of the present invention is to provide an image transmission device or the like capable of preventing a time delay from occurring in compressed video data transmitted to the receiving side through a line activated at a low data transfer rate.

An image transfer device according to the present invention comprises a video camera, imaging range-changing means for changing an imaging range of the video camera, data compressing means for performing a data compressing process on an imaged video signal outputted from the video camera to thereby obtain compressed video data, data transmitting means for transmitting the compressed video data to a line, and compression rate control means for controlling the rate of compression of data by the data compressing means, the rate increasing when the imaging range of the video camera is changed by the imaging range-changing means.

Further, an image transfer system according to this invention is an image transmission system that comprises a transmitting-side device and a receiving-side device, both devices being connected to each other through a predetermined line. The transmitting-side device comprises a video camera, data compressing means for performing a data compressing process on an imaged video signal outputted from the video camera to thereby obtain compressed video data, data transmitting means for transmitting the compressed video data to the receiving-side device through the line, control signal receiving means for receiving an imaging range control signal for changing an imaging range of the video camera therein, which is transmitted from the receiving-side device through the line, imaging range-changing means for changing the imaging range of the video camera based on the imaging range control signal, and compression rate control means for controlling the rate of compression of data by the data compressing means, the rate increasing when the imaging range of the video camera is changed by the imaging range-changing means. Further, the receiving-side device comprises data receiving means for receiving the compressed video data transmitted from the transmitting-side device through the line, data expanding means for performing a data expanding process on the compressed video data to thereby obtain a received video signal, image display means for displaying an image based on the received video signal, operating means for obtaining the imaging range control signal for changing the imaging range of the video camera, and control signal transmitting means for transmitting the imaging range control signal to the transmitting-side device through the line.

The imaging range-changing means may change the imaging range of the video camera on the transmitting side. The imaging range-changing means is, for example, a pan tilter for changing an imaging direction of the video camera, a zoom mechanism for changing zoom magnification of the video camera, etc. For example, the operating means provided on the receiving side produces an imaging range control signal. This imaging range control signal is supplied to the transmitting side to control the operation of the imaging range-changing means.

An imaged video signal outputted from the video camera is supplied to the data compressing means where compressed video data is formed. This compressed video data is delivered to a line and transmitted to the receiving side. On the receiving side, the compressed video data is supplied to the data expanding means where a received video signal is formed. The display means displays an image based on this received video signal.

When the imaging range of the video camera is changed by the imaging range-changing means, the screen greatly varies but the rate of compression of data by the data compressing means is controlled so as to increase. Therefore, when the data compressing means compresses a frame-to-frame difference of a video signal, for example to thereby produce the compressed video data DV, an increase in the amount of the compressed video data is restrained. Therefore, even if the line is activated at a low data transfer rate, the compressed video data is smoothly transmitted to the receiving side, whereby a time delay is prevented from occurring. Thus, no time delay is produced even in the image displayed on the display means. For example, the operation of the operating means by the supervisor makes it easy to control the pan tilter so that the video camera takes a monitored object corresponding to a target.

The invention will now be described by way of example with reference to the accompanying drawings, throughout which like parts are referred to by like references, and in which:
Fig. 1 is a block diagram showing an example of a configuration of a conventional remote supervisory system;
Fig. 2 is a block diagram showing a configuration of a remote supervisory system defined as an embodiment of this invention;
Fig. 3 is block diagram illustrating a configuration of a video signal compressor which constitutes the remote supervisory system; and
Fig. 4 is a flowchart for describing control operation of a quantization coefficient.

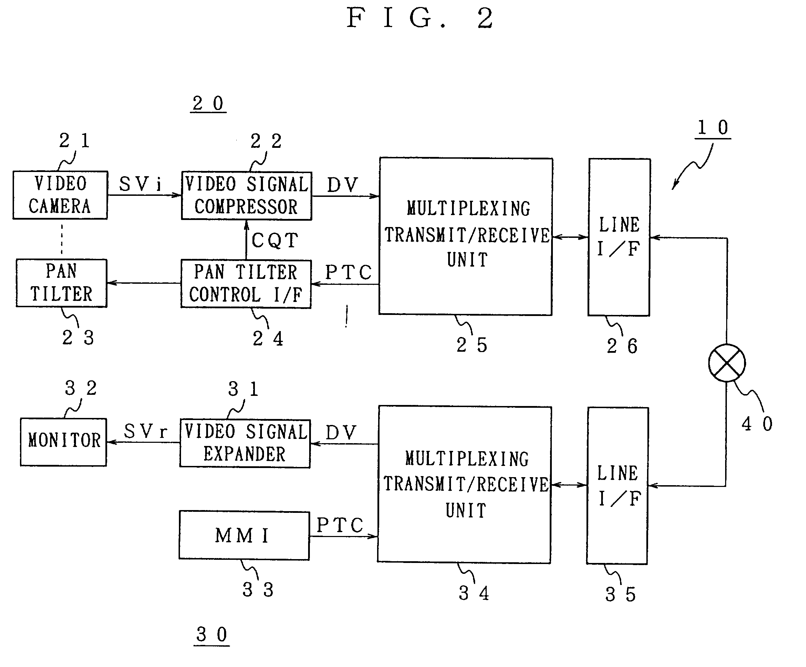

An embodiment of this invention will hereinafter be described with reference to the drawings. Fig. 2 shows a configuration of a remote monitoring or supervisory system 10 defined as an embodiment. The present remote supervisory system 10 is constructed such that a transmitting-side device 20 placed on the monitored-object side and a receiving-side device 30 placed on the monitor center side are connected to each other by an ISDN line 40.

The transmitting-side device 20 comprises a video camera 21 for imaging an object to be monitored (not shown), a video signal compressor 22 for performing an A/D converting process, a data compressing process or the like on an imaged video signal SVi outputted from the video camera 21 to thereby obtain compressed video data DV, a pan tilter 23 for changing the imaging direction of the video camera 21 to horizontal and upward and downward directions, i.e., performing camera work such as panning, tilting, and a pan tilter control interface 24 for controlling the pan tilter 23 based on a control signal PTC for the pan tilter 23, which is transmitted from the receiving-side device 30 through the ISDN line 40, so that the pan tilter 23 may perform the camera work such as panning and tilting.

Now, the video signal compressor 22 is constructed based on ITU-TH.261 standards as will be described later. Further, the pan tilter control interface 24 generates a state signal CQT indicative of whether the pan tilter 23 is in a state of being performing the camera work such as panning and tilting. The pan tilter control interface 24 supplies this state signal CQT to the video signal compressor 22 as a control signal for a quantization coefficient.

Further, the transmitting-side device 20 comprises a multiplexing transmit/receive unit 25 for performing, in multiplexed form, transmission of the compressed video data DV obtained from the video signal compressor 22 and reception of the control signal PTC for the pan tilter 23 from the receiving-side device 30, and a line interface 26 for connecting the multiplexing transmit/receive unit 25 to the ISDN line 40.

On the other hand, the receiving-side device 30 comprises a video signal expander 31 for performing a data expanding process, a D/A converting process, etc. on the compressed video data DV transmitted via the ISDN line 40 from the transmitting-side device 20 to thereby obtain a received video signal SVr, a monitor 32 for displaying an image based on the received video signal SVr, and a man-machine interface (MMI) 33 used as operating means for generating the above-described control signal PTC for pan tilter 23. Here, the man-machine interface 33 is composed of a pointing device such as a joystick or the like.

Further, the receiving-side device 30 comprises a multiplexing transmit/receive unit 34 for performing, in multiplexed form, reception of the compressed video data DV obtained from the transmitting-side device 20 and transmission of the control signal PTC for the pan tilter 23 obtained from the man-machine interface 33, and a line interface 35 for connecting the multiplexing transmit/receive unit 34 to the ISDN line 40.

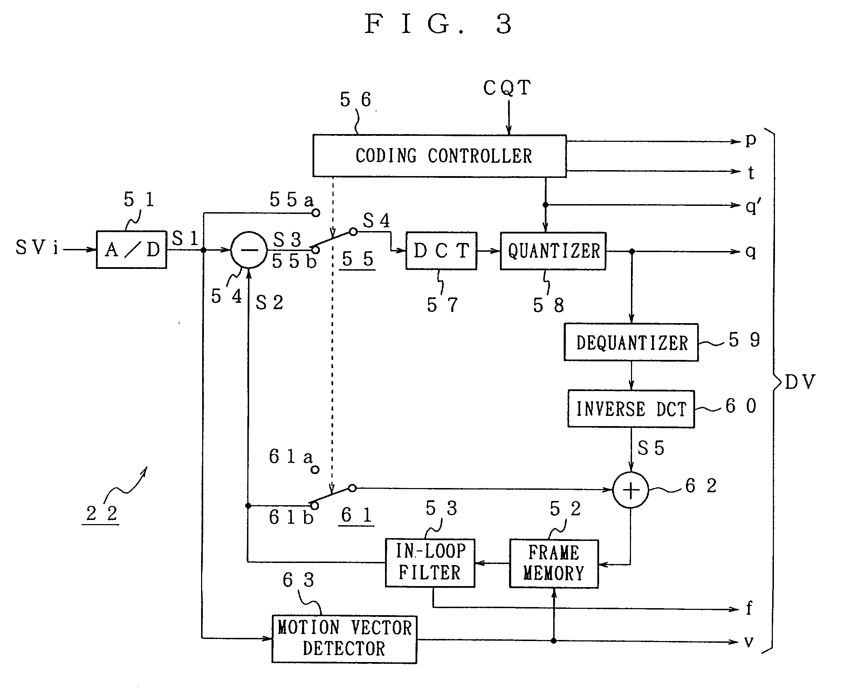

Fig. 3 shows a configuration of a video signal compressor 22, which constitutes the remote supervisory system, and we will explain the configuration of the video signal compressor 22 by using Fig. 3. The video signal compressor 22 comprises an A/D converter 51 for converting the imaged video signal SVi supplied from the video camera 111 to a digital signal, a frame memory 52 used as a prediction memory, an in-loop filter (low-pass filter) 53 for reducing distortion produced by quantization, and a subtracter 54 for calculating the difference between a video signal S1 for the present frame, which is outputted from the A/D converter 51, and a video signal S2 of an immediately preceding frame, which is obtained from the frame memory 52 through the in-loop filter 53.

The video signal compressor 22 also comprises a selector switch 55 for selecting either the video signal S1 for the present frame outputted from the A/D converter 51 or a difference signal S3 outputted from the subtracter 54 and taking out the selected one. The video signal S1 is supplied to a fixed terminal on the 55a side of the selector switch 55, and the difference signal S3 is supplied to a fixed terminal on the 55b side thereof. A coding controller 56 controls the switching of the selector switch 55. When in-frame coding is performed, the selector switch 55 is connected to the fixed terminal on the 55a side, whereas when frame-to-frame coding is performed, the selector switch 55 is connected to the fixed terminal on the 55b side. Incidentally, the coding controller 56 is one used to control the entire operation of the video signal compressor 22.

Further, the video signal compressor 22 comprises a DCT transformer 57 for performing discrete cosine transform (DCT: Discrete Cosine Transform) on an output signal S4 of the selector switch 55 every blocks, and a quantizer 58 for quantizing a transform coefficient for each block, which is outputted from the DCT transformer 57, to thereby obtain a quantized transform coefficient q. In this case, the coding controller 56 supplies designated information for quantized characteristic q' to the quantizer 58 so that a quantization coefficient for the quantizer 58 is controlled.

Moreover, the video signal compressor 22 comprises a dequantizer 59 for inversely quantizing the quantized transform coefficient q outputted from the quantizer 58, an inverse discrete cosine transformer 60 for performing inverse discrete cosine transformation on a transform coefficient outputted from the dequantizer 59, a selector switch 61 for selectively taking out the video signal S2 of the immediately preceding frame outputted from the frame memory 52 through the in-loop filter 53, and an adder 62 for adding the video signal S2 of the immediately preceding frame taken out by the selector switch 61 and a signal S5 outputted from the inverse discrete cosine transform 60 to thereby obtain a video signal used in the next frame as the video signal S2 of the immediately preceding frame upon the frame-to-frame coding and supplying the resultant video signal to the frame memory 52.

In this case, the fixed terminal on the 61a side of the selector switch 61 is kept in an electrically isolated state and the fixed terminal on the 61b side thereof is supplied with the video signal S2. The coding controller 56 also controls the switching of the selector switch 61. When the in-frame coding is performed, the selector switch 61 is electrically connected to the fixed terminal on the 61a side, whereas when the frame-to-frame coding is performed, the selector switch 61 is electrically connected to the fixed terminal on the 61b side.

The video signal compressor 22 comprises a motion vector detector 63 for detecting a motion vector v from the video signal S1 of the present frame outputted from the A/D converter 51. The motion vector detector 63 supplies the motion vector v detected thereby to the above-described frame memory 52 so that a read position of the frame memory 52, for obtaining the video signal S2 of the immediately preceding frame is controlled to reduce the difference signal S3 outputted from the subtracter 54. Thus, a motion-compensation frame-to-frame prediction is achieved.

The operation of the video signal compressor 22 shown in Fig. 3 will be described. The video signal compressor 22 intermittently performs in-frame coding with predetermined timing and continuously performs frame-to-frame coding during other periods. When the in-frame coding is carried out, the selector switches 55 and 61 are respectively connected to the fixed terminals on 55a and 61a sides. Therefore, the video signal S1 of the present frame outputted from the A/D converter 51 is supplied to the discrete cosine transformer 57 through the selector switch 55 where it is subjected to discrete cosine transformation. Further, the quantizer 58 receives transform coefficient from the discrete cosine transformer 57 and quantizes the transform coefficient to produce the quantized transform coefficient q.

On the other hand, when the frame-to-frame coding is done the selector switches 55 and 61 are respectively connected to the fixed terminals on 55b and 61b sides. Therefore, the signal S3 outputted from the subtracter 54, which is corresponding to the difference between the video signal S1 of the present frame and the video signal S2 of the immediately preceding frame outputted via the in-loop filter 53 from the frame memory 52, is supplied to the discrete cosine transformer 57 via the selector switch 55 where it is subjected to discrete cosine transformation. Further, the quantizer 58 receives the transform coefficient from the discrete cosine transformer 57 and quantizes the transform coefficient to produce the quantized transform coefficient q.

Incidentally, in this case, the dequantizer 59 quantizes inversely the transform coefficient q and the inverse discrete cosine transformer 60 performs the inverse discrete cosine transformation on the transform coefficient outputted from the dequantizer 59. Thereafter, the adder 62 adds the signal S5 outputted from the anti-discrete cosine transformer 60 and the video signal S2 of the immediately preceding frame taken out by the selector switch 61 to obtain the video signal used in the following frame as the video signal S2 of the immediately preceding frame. This video signal is written into the frame memory 52.

Even when either of the above-described in-frame coding and frame-to-frame coding is performed, a frame-to-frame/in-frame coding identification flag p, a transmission/non-transmission identification flag t and the designated information for quantized characteristic q' outputted from the coding controller 56, an in-loop filter on/off signal f outputted from the in-loop filter 53, and a motion vector v outputted from the motion vector detector 63 are outputted as compressed video data DV together with the quantized transform coefficient q.

While the video signal compressor 22 is supplied with the state signal CQT indicative of whether the pan tilter 23 is in the state of being performing the camera work such as panning and tilting, from the pan tilter control interface 24 (see Fig. 2), the coding controller 56 receives the present state signal CQT. When the state signal CQT indicates that the pan tilter 23 is not in the state of being performing the camera work such as panning and tilting, the coding controller 56 controls the designated information for quantized characteristic q' supplied to the quantizer 58 so that the quantization coefficient for the quantizer 58 is set to a standard value (e.g., "7" when the quantization coefficient takes values ranging from 1 to 15).

When the state signal CQT indicates that the pan tilter 23 is in the state of being performing the camera work such as panning and tilting, the coding controller 56 controls the designated information for quantized characteristic q' supplied to the quantizer 58 in such a manner that the quantization coefficient for the quantizer 58 is set to a motion priority value (e.g., "13" when the quantization coefficient takes the values ranging from 1 to 15). Thus, the rate of compression of data is increased, and an increase in the amount of the compressed video data DV related to the frame-to-frame coding is restrained where the movement of the screen greatly occurs in the state in which the pan tilter 23 is performing the camera work such as panning and tilting.

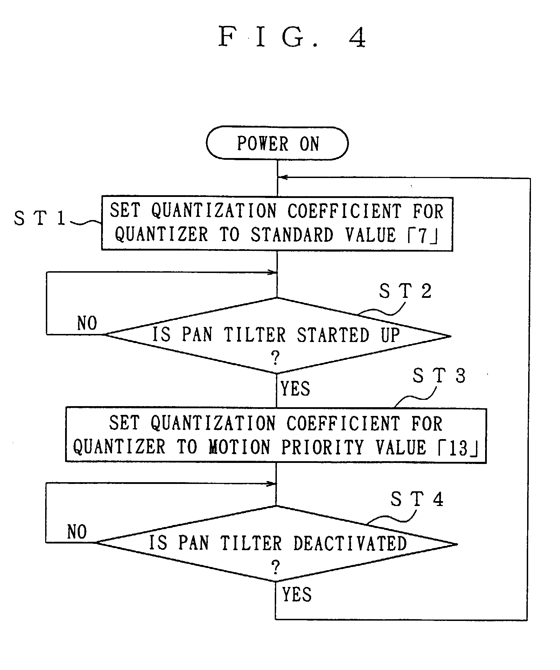

Fig. 4 is a flowchart showing a control operation of the quantization coefficient for the quantizer 58 by the coding controller 56 in the video signal compressor 22.

The coding controller 56 starts the control operation upon power-on. In Step ST1, the coding controller 56 controls the designated information for quantized characteristic q' supplied to the quantizer 58 to set the quantization coefficient for the quantizer 58 to the standard value "7". Next, in Step ST2, the coding controller 56 determines by reference to the state signal CQT whether the pan tilter 23 has started up, i.e., the pan tilter 23 is brought to the state in which it performs the camera work such as panning and tilting. When the pan tilter 23 has started up, the coding controller 56 proceeds to Step ST3.

In Step ST3, the coding controller 56 controls the designated information for quantized characteristic q' supplied to the quantizer 58 to set the quantization coefficient for the quantizer 58 to the motion priority value "13". Next, in Step ST4, the coding controller 56 makes a decision as to whether the pan tilter 23 is deactivated, i.e., the pan tilter 23 has ended the state in which it performs the camera work such as panning and tilting. When the pan tilter 23 has stopped operating, the coding controller 56 returns to Step ST1 where the quantization coefficient for the quantizer 58 is set to the standard value "7", and the following control operation is repeatedly executed as described above.

The operation of the remote supervisory system 10 shown in Fig. 2 will next be described.

The video camera 21 of the transmitting-side device 20 images an object to be supervised and supplies an imaged video signal SVi obtained thereby to the video signal compressor 22. The video signal compressor 22 performs the A/D converting process, data compressing process, etc. on the imaged video signal SVi to produce compressed video data DV. The multiplexing transmit/receive unit 25 receives this compressed video data DV from the video signal compressor 22 and transmits the compressed video data DV to the receiving-side device 30 through the ISDN line 40.

The multiplexing transmit/receive unit 34 of the receiving-side device 30 receives the above-described compressed video data DV and supplies it to the video signal expander 31. The video signal expander 31 performs the data expanding process, D/A converting process, etc. on the compressed video data DV to produce a received video signal SVr corresponding to the imaged video signal SVi outputted from the video camera 21. The monitor 32 receives this received video signal SVr and displays an image or picture based on the received video signal SVr. Thus, the imaged picture for the object to be monitored is displayed on the monitor 32 on the monitor center side, whereby the supervisor can monitor the object on the screen of the monitor 32.

On the monitor center side, the supervisor operates the man-machine interface 33 of the receiving-side device 30 to change the imaging direction of the video camera 21, whereby a control signal PTC for the pan tilter 23 is produced. The multiplexing transmit/receive unit 34 receives this control signal PTC from the man-machine interface 33 and transmits the control signal PTC to the transmitting-side device 20 through the ISDN line 40.

Further, the multiplexing transmit/receive unit 25 of the transmitting-side device 20 receives the above-described control signal PTC and supplies the control signal PTC to the pan tilter control interface 24. The pan tilter 23 control the video camera 21 so that the camera work such as panning and tilting may be performed based on the control signal PTC. Thus, the supervisor can change the imaging direction of the video camera 21 according to the operation of the man-machine interface 33.

While the screen greatly varies in a state in which the imaging direction of the video camera 21 has been changed according to the operation of the man-machine interface 33 by the supervisor, the rate of compression of data by the video signal compressor 22 is now controlled so as to increase. Therefore, when the video signal compressor 22 performs frame-to-frame coding, an increase in the amount of the compressed video data DV is restrained. Therefore, even if the ISDN line 40 is activated at a low data transfer rate, the compressed video data DV is smoothly transmitted to the receiving-side device 30, whereby a time delay is prevented from occurring. Thus, no time delay is produced even in the image displayed on the monitor 32. Further, the supervisor operates the man-machine interface 33 to thereby facilitate the control of the pan tilter 23 so that the video camera 21 takes a monitored object corresponding to a target.

Incidentally, the aforementioned embodiment has shown the case in which the imaging range-changing means is the pan tilter 23 for changing the imaging direction of the video camera 21. However, this invention is not limited to this. The imaging rage changing means is similarly suitable for application to a zoom mechanism for changing zoom magnification of the video camera 21. Incidentally, when the zoom magnification is in a changed state, the imaging range (angle of field) of the video camera 21 varies and the motion of the screen increases.

In the aforementioned embodiment, the video signal compressor 22 is constructed based on the ITU-TH.261 standards. However, the present invention is generally suitable for application to the case of utilization of data compressing means constructed so as to increase the amount of compressed video data when the video camera is changed in imaging range.

According to the image transmission device as described above, when an imaging range of a video camera is changed according to camera work such as panning, tilting or the like, the rate of compression of compressed video data by data compressing means is increased to restrain an increase in the amount of the compressed video data. A time delay can be prevented from occurring in the compressed video data transmitted to the receiving side through a line activated at a low data transfer rate. Thus, no time delay occurs even in an image displayed on display means. For example, the operation of control means by a supervisor makes it easy to control a pan tilter or the like so that the video camera catches an object to be monitored corresponding to a target.

The invention may be embodied in other specific forms without departing from the essential characteristics thereof. The present embodiment is therefore to be considered in all respects as illustrative and not restrictive, the scope of the invention being indicated by the appended claims rather than by the foregoing description.

## Claims

1. An image transmission device, comprising:
a video camera;
imaging range-changing means for changing an imaging range of said video camera;
data compressing means for performing a data compressing process on an imaged video signal outputted from said video camera to thereby obtain compressed video data;
data transmitting means for transmitting the compressed video data to a line; and
compression rate control means for controlling the rate of compression of data by said data compressing means, the rate increasing when the imaging range of said video camera is changed by said imaging range-changing means.

2. The image transmission device according to claim 1, wherein said imaging range-changing means is a pan tilter for changing the direction of imaging of said video camera.

3. The image transmission device according to claim 1, wherein said data compressing means comprises a quantizer and said compression rate control means controls a quantization coefficient for said quantizer to increase the rate of compression of the data by said data compressing means.

4. An image transmission system, comprising:
a transmitting-side device; and
a receiving-side device,
said transmitting-side device and said receiving-side device being connected to each other through a predetermined line;
wherein said transmitting-side device includes,
a video camera;
data compressing means for performing a data compressing process on an imaged video signal outputted from said video camera to thereby obtain compressed video data;
data transmitting means for transmitting the compressed video data to said receiving-side device through the line;
control signal receiving means for receiving an imaging range control signal for changing an imaging range of said video camera therein, said control signal being transmitted from said receiving-side device through the line;
imaging range-changing means for changing the imaging range of said video camera based on the imaging range control signal; and
compression rate control means for controlling the rate of compression of data by said data compressing means, the rate increasing when the imaging range of said video camera is changed by said imaging range-changing means; and
wherein said receiving-side device includes,
data receiving means for receiving the compressed video data transmitted from said transmitting-side device through the line;
data expanding means for performing a data expanding process on the compressed video data to thereby obtain a received video signal;
image display means for displaying an image based on the received video signal;
operating means for obtaining the imaging range control signal for changing the imaging range of said video camera; and
control signal transmitting means for transmitting the imaging range control signal to said transmitting-side device through the line.

5. The image transmission system according to claim 4, wherein said imaging range-changing means is a pan tilter for changing the direction of imaging of said video camera, and said imaging range control signal obtained from said operating means is a signal for controlling the pan tilter.
